Europäisches Patentamt

(19) European Patent Office

Office européen des brevets

(11) Publication number: **0 009 960**
**A1**

# EUROPEAN PATENT APPLICATION

(21) Application number: 79302070.2

(22) Date of filing: 01.10.79

(51) Int. Cl.³: **F 16 K 19/00**

(30) Priority: 03.10.78 GB 3904478

(43) Date of publication of application:
16.04.80 Bulletin 80/8

(84) Designated Contracting States:
DE FR GB IT

(71) Applicant: DELTAFLOW LIMITED
Metropolitan House, I Hagley Road
Edgbaston, Birmingham, B16 8TG(GB)

(72) Inventor: Norwood, Harold
27 Edinburgh Close, Carlyon Bay
St. Austell, Cornwall(GB)

(74) Representative: Campbell, Geoffrey Duncan
Lethaby et al,
BARKER, BRETTELL & DUNCAN 138 Hagley Road
Edgbaston Birmingham, B16 9PW(GB)

(54) Thermostatically controlled mixing valve.

(57) A valve comprises a mixing chamber with inlet ports (A to E) for admission of hot and cold water, a hollow valve sleeve (2) in the chamber to control the entry of water from the inlet ports, and a thermally responsive cartridge (3) within the sleeve to control sleeve movement. Apertures (J) and (K) in the sleeve allow water to pass from the inlet ports to a mixing region within the sleeve, where the water impinges on the cartridge.

The mixing chamber has parallel opposite side walls, and in each of the opposed side walls there are two cold water inlet ports and two hot water inlet ports, the two inlet ports for each of the hot and cold water being arranged in line in the direction of movement of the sleeve (2). The arrangement is such that pressure on the slide member remains balanced despite fluctuations in water supply pressures.

FIG 6

## THERMOSTATICALLY CONTROLLED MIXING VALVE

This invention relates to a thermostatically controlled mixing valve comprising a mixing chamber with inlet ports for hot and cold water to be mixed, a movable slide member mounted in the chamber to control the entry of hot and cold water into the chamber from said inlet ports, and a thermally responsive device arranged to control the movement of the slide member, the slide member being hollow and having apertures to permit hot and cold water to enter a mixing region within the slide member in proportions determined by its position within said chamber, and the thermally responsive device being mounted within the slide member in said mixing region. In many such valves the mixing chamber is cylindrical, with the cartridge in its centre and acting on a hollow slide member in the form of a cylindrical sleeve that serves as a spool valve to uncover hot and cold water inlet ports in the chamber wall.

One of the problems associated with known mixing valves is that of a change in the outlet temperature taking place as a result of transient changes in the pressure of the hot or cold supply. The response of the thermostatic control cartridge can never be instantaneous, and there are difficulties in ensuring that the cartridge is not unduly influenced by the flow from one inlet rather than the other, especially in the event of supply pressure changes, bearing in mind that the cartridge is not placed in the outlet but in the chamber where mixing is taking place.

The aim of the present invention is to provide an improved mixing valve that at least partially overcomes these difficulties. According to the invention a valve is characterised in that the mixing chamber has at least two inlet ports for the hot water and at least two inlet ports for the cold water.

In this way, the many entering streams of fluid are thoroughly mixed as they enter, and are passed directly over the cartridge or other thermally responsive device, which is thus influenced by the true quantitative proportions of the two streams and reacts correspondingly faster than a device relying on the temperature change of a mixed water "reservoir".

Preferably the inlet ports are arranged so that pressure on the slide member will remain balanced despite fluctuations in the pressures of supplies of the hot and cold water to the inlet ports.

In a preferred layout the inlet ports for each of the hot and cold water are numerically evenly distributed between opposite sides of the mixing chamber. Preferably the slide member is not cylindrical but flat-sided, and the inlet ports are located in parallel opposite side walls bounding the mixing chamber. There may be two inlet ports for the hot water and two inlet ports for the cold water at each of the opposite sides of the chamber, and preferably the two inlet ports for each of the hot and the cold water, at each of the opposite sides of the mixing chamber, are arranged in line in the direction of movement of the slide member.

An advantage of the use of a rectangular, or at least flat-sided, slide member is that it eliminates problems of alignment, of the inlet ports and the apertures, associated with an axially displaceable slide member in the form of a cylindrical sleeve.

Two examples of thermostatically controlled mixing valves according to the invention will now be described with reference to the accompanying drawings, in which:

Figure 1 is a transverse vertical section through a first embodiment, on the line I-I in Figure 3;

Figure 2 is a transverse vertical section on the line II-II in Figure 3;

Figure 3 is a horizontal section through the valve on the line III-III in Figure 1;

Figure 4 is a plan view of a manifold bottom cover of the first valve, looking from above;

4

Figure 5 is a view in elevation of a slide member alone of the first valve, seen in the direction of the arrow A in Figure 1.

Figure 6 is a view similar to Figure 1 but of the second embodiment, the view being taken on the line VI-VI of Figure 8;

Figure 7 is a longitudinal vertical section on the·line VII-VII of Figure 8, with parts omitted to show a wall of the mixing chamber;

Figure 8 is a sectional plan view on the line VIII-VIII of Figure 7; and

Figure 9 shows a slide member of the second valve.

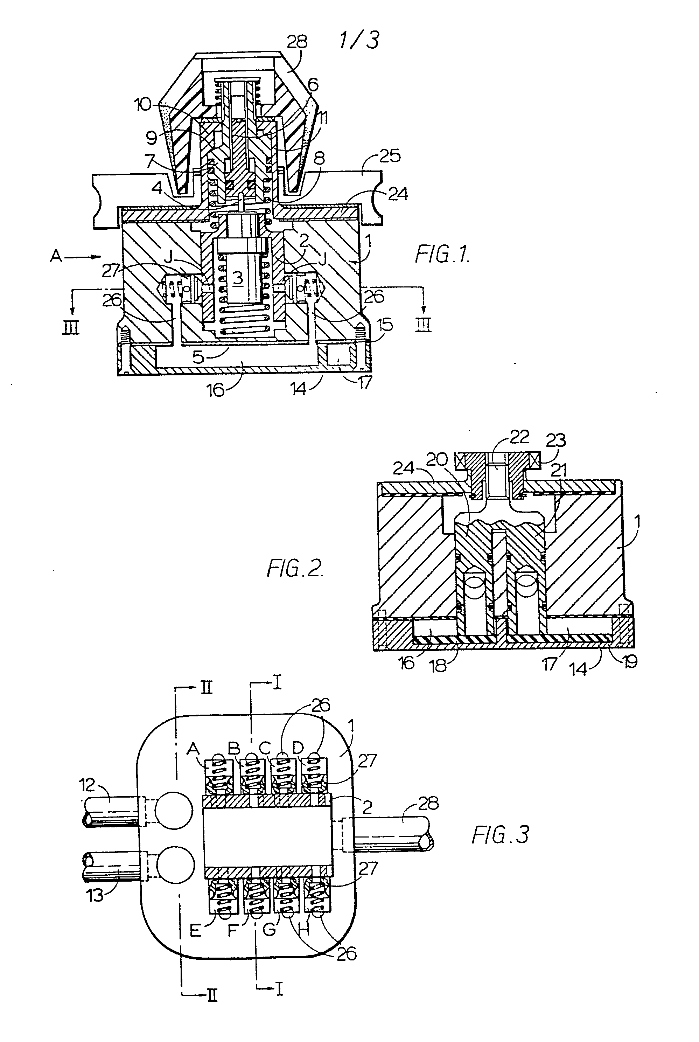

The first valve (Figures 1 to 5) comprises a body 1 through which is machined a rectangular opening to provide a mixing chamber receiving a hollow slide member in the form of a vertically sliding sleeve 2 of channel section, open downwards, as seen in Figure 1. The interior of this sleeve forms a mixing region within the chamber and contains a standard thermally responsive cartridge 3, of which a movable pin 4 projects to a greater extent the higher the temperature. The cartridge and sleeve are urged upwards by a spring 5, and the pin 4 engages an externally screw-threaded adjusting member 6 mounted in a tubular carrier 7. This carrier is urged upwards by a spring 8 which bears downwards on the valve sleeve 2, so that a helical cam surface 9 of a shoulder on the carrier 7 bears against a co-operating cam surface on the underside of a flange 10 of a fixed central boss 11.

A central spigot portion of the carrier 7 projects upwards through the flange 10 and is splined to receive a manual control knob 28. Rotation of the knob 28 moves the carrier 7 and the member 6 axially, thereby altering the position of the valve sleeve 2 for a given temperature, which is the same thing as saying it alters the temperature at which the sleeve occupies a given position. Rotation of the member 6 within the sleeve 7 provides an adjustment which can be set during manufacture.

Hot and cold supply pipes are shown at 12 and 13 in Figure 3, leading into the main body 1. A manifold cover 14 is sealed to the bottom face of the body by a gasket 15 and separate labyrinthine recesses 16 and 17 in this cover contain resilient seatings 18 and 19 (Figure 2) to be engaged by respective vertically sliding hollow cylindrical valve stems 20 and 21. The valve stems have side ports communicating with respective inlet ports for entry of water to the mixing chamber. The two valve stems are joined at their upper ends to a screw-threaded spigot 22 engaging in the threaded bore of a pinion 23 which is mounted for rotation, but without vertical movement, in a cover 24 on top of the body 1.

A large-diameter handwheel 25 (Figure 1) fits over the cover 24 and is coaxial with the carrier 7, being rotatable about the central boss 11. The handwheel is internally toothed to engage the pinion 23 and it will be understood that rotation of the handwheel will rotate the pinion, lifting or lowering the valve members 20 and 21 to open or shut off both the hot and cold water supplies simultaneously.

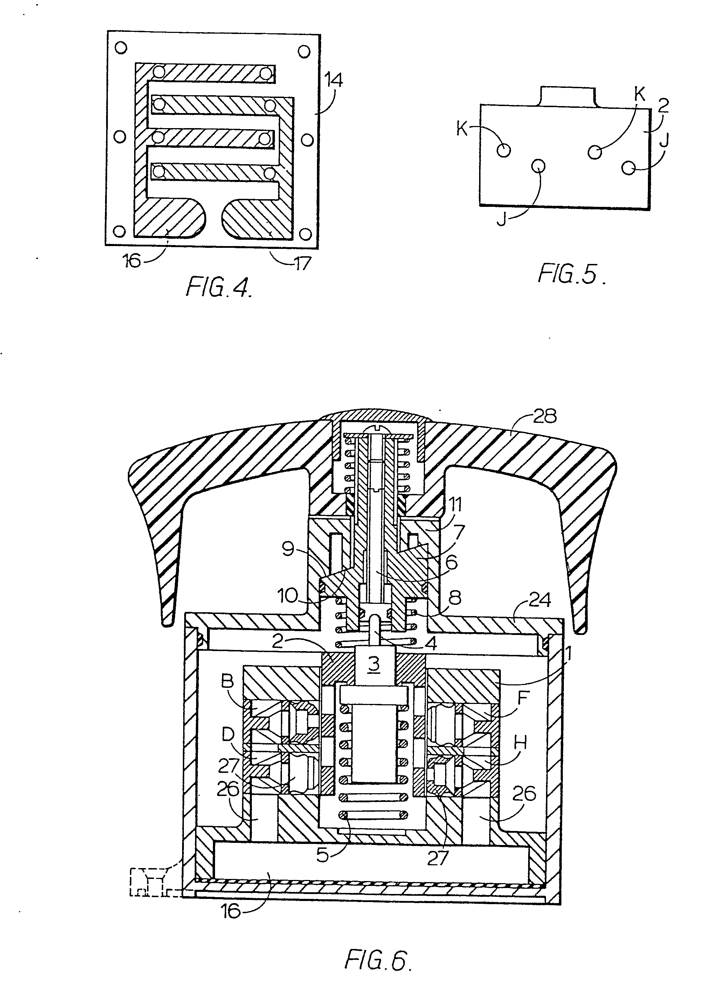

The recesses 16 and 17, as shown in Figure 4, are such that the recess 16 for the hot water supply leads to the lower ends of vertical drillings 26 in the body that communicates with inlet ports B and D in a side wall of the mixing chamber on one side of the sleeve 2 (see Figure 3) and inlet ports F and H in a parallel side wall on the opposite side, whilst the recess 17 similarly communicates with inlet ports A and C on the one side and inlet ports E and G on the other. Each port contains a spring-loading thimble 27, of rubber or synthetic resin, sealing the port against the adjacent side wall of the sleeve 2, and these side walls have apertures J and K (see Figures 1 and 5) at appropriate levels to cover and uncover the inlet ports as the sleeve moves vertically. The apertures J and K are at different levels, as shown in Figure 5, so that, as the sleeve 2 moves vertically, under the control of the cartridge 3, one set is progressively uncovered as the other set is progressively closed off and the entry of hot and cold water into the chamber is controlled. The proportions of hot and cold water entering the mixing region is thus determined by the position of the sleeve 2 within the mixing chamber.

It will be appreciated that by virture of the splitting of both the hot and the cold water supplies into a number of paths, and distributing them numerically evenly between opposite sides of the sleeve, not only do we ensure that the forces on the sleeve are balanced despite any fluctuations in supply pressures but also the effects on the cartridge of altered flow paths within the mixing chamber due to changes of pressure are kept to a minimum.

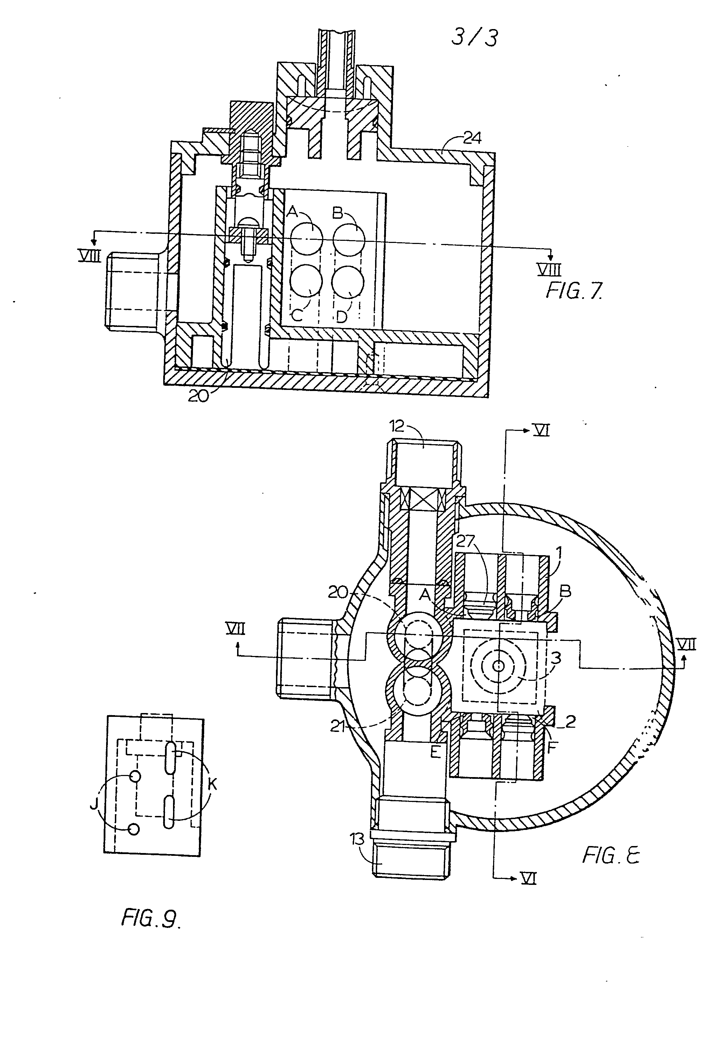

The second valve (Figures 6 to 9) is of a generally similar construction to the first valve, and the same reference numerals are used to indicate equivalent components. The main difference between the two valves lies in the arragement of the inlet ports A to H and the apertures J and K in the valve sleeve 2. In the second valve the two inlet ports for each of the hot and cold water at each side of the chamber are arranged in line in the direction of movement of the sleeve (i.e. vertically, as seen in Figures 6 and 7). The ports B, D, F and H (Figure 6) are connected to the hot supply pipe 12, and the ports A, C, E and G are connected to the cold supply pipe 13. In the sleeve 2 (Figure 9) the apertures K are located to oppose the cold water ports, and the apertures J are located to oppose the hot water ports.

1

## CLAIMS

1. A thermostatically controlled mixing valve comprising a mixing chamber with inlet ports for hot and cold water to be mixed, a movable slide member mounted in the chamber to control the entry of hot and cold water into the chamber from said inlet ports, and a thermally responsive device arranged to control the movement of the slide member, the slide member being hollow and having apertures to permit hot and cold water to enter a mixing region within the slide member in proportions determined by its position within said chamber, and the thermally responsive device being mounted within the slide member in said mixing region, characterised in that the mixing chamber has at least two inlet ports (B, D, F, H) for the hot water and at least two inlet ports (A, C, E, G) for the cold water.

2. A valve according to claim 1 further characterised in that the inlet ports for each of the hot and cold water are numerically evenly distributed between opposite sides of the mixing chamber.

3. A valve according to Claim 2 further characterised in that there are two inlet ports for the hot water and two inlet ports for the cold water at each of said opposite sides of the mixing chamber.

4. A valve according to Claim 3 further characterised in that the two inlet ports for each of the hot and the cold water, at each of said opposite sides of the mixing chamber, are arranged in line in the direction of movement of the slide member (2).

0009960

5.   A valve according to any one of Claims 1 to 4 further characterised in that the inlet ports are located in parallel opposite side walls of the mixing chamber.

1/3

FIG.1.

FIG.2.

FIG.3

FIG.4.

FIG.5.

FIG.6.

3/3

0009960

FIG.7.

FIG.8.

FIG.9.

## European Patent Office

## EUROPEAN SEARCH REPORT

EP 79302070.2

| DOCUMENTS CONSIDERED TO BE RELEVANT | | | CLASSIFICATION OF THE APPLICATION (Int. Cl.) 3 |
|---|---|---|---|
| Category | Citation of document with indication, where appropriate, of relevant passages | Relevant to claim | |
| | DE - A1 - 2 433 459 (PONT-A-MOUS-SON) <br><br> + Totality + <br><br> -- | 1,2 | F 16 K 19/00 |
| | DE - A1 - 2 548 650 (PONT-A-MOUS-SON) <br><br> + Totality + <br> & GB-A-1 498 638 & CH-A-596 484 <br><br> -- | 1,2 | |
| | DE - A - 2 333 019 (PONT-A-MOUS-SON) <br><br> + Totality + <br> & CH-A- 576 090 & FR-A-2 191 689 <br> & GB-A-1 425 326 <br><br> ---- | 1,2 | **TECHNICAL FIELDS SEARCHED (Int.Cl.) 3** <br><br> F 16 K 19/00 <br> F 16 K 11/00 <br> F 16 K 11/06 <br> F 16 K 11/07 <br> F 16 K 11/10 <br> F 16 K 11/22 <br> F 16 K 3/24 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> VIENNA | Date of completion of the search <br> 14-12-1979 | Examiner <br> URBAN | |

EPO Form 1503.1 06.78